# EUROPEAN PATENT APPLICATION

(11) **EP 4 836 063 A1**
(43) Date of publication of application: **04.11.2026**
(21) Application number: 24898934.5
(22) Date of filing: 23.04.2024
(51) Int. Cl.: H01M 10/0587, H01M 10/04, H01M 10/052

(54) **ELECTRODE ASSEMBLY AND RECHARGEABLE BATTERY COMPRISING SAME**

(30) Priority: 28.12.2023 KR 20230194782
(71) Applicant: Samsung SDI Co., Ltd, Gyeonggi-do 17084 (KR)
(72) Inventor: SUNG, Geonkyu, Gyeonggi-do 17084 (KR); JEON, Deokho, Gyeonggi-do 17084 (KR); LEE, Sang-Mi, Gyeonggi-do 17084 (KR)
(74) Representative: Marks & Clerk LLP
(86) International application number: PCT/KR2024/005439
(87) International publication number: WO 2025/143375

(57) **Abstract**

An electrode assembly and a rechargeable battery having the same are disclosed. The electrode assembly according to an embodiment is an electrode assembly in which a plurality of electrode plates are wound with a separator therebetween, wherein an outermost electrode plate, which is positioned outermost, among the plurality of electrode plates includes a penetration portion positioned adjacent to an end portion of the outermost electrode plate; and a contact portion of which a part of a periphery is cut so as to protrude from the outermost electrode plate and is folded to tightly contact a periphery of the penetration portion in a state of penetrating the penetration portion.

## Description

### [Technical Field]

The present disclosure relates to an electrode assembly and a rechargeable battery including the same.

### [Background Art]

A rechargeable battery is a battery capable of being repeatedly charged and discharged, unlike a primary battery incapable of being recharged. A low-capacity rechargeable battery in which one electrode assembly is packaged in a form of pack is used for small portable electronic devices, such as mobile phones and camcorders, and a large-capacity rechargeable battery in which tens of electrode assemblies are connected is widely used as a power source for driving motors for electric scooters, hybrid vehicles, and electric vehicles.

Rechargeable batteries are manufactured in various shapes, among which a cylindrical rechargeable battery includes an electrode assembly, a cylindrical can accommodating the electrode assembly and electrolyte, and a cap assembly combined to a top opening of the can to seal the can and allowing the current generated from the electrode assembly to flow to an external device.

Recently, high-power, high-capacity rechargeable batteries are being researched. In the case of high-power cylindrical rechargeable batteries, cracks may occur due to the pressure generated between the can and the electrode assembly. In particular, it is problematic that cracks occur as the pressure increases significantly at discontinuous parts, such as tabs inside the electrode assembly, and protruding parts, such as the finishing tape attached to the outside of the electrode assembly.

### [Disclosure]

### [Technical Problem]

The present disclosure, for overcoming the conventional problems, attempts to provide an electrode assembly of which the end portion can be finished without finishing tapes which causes cracks, and to provide a rechargeable battery including the same.

However, the technical problem to be solved by the present disclosure is not limited to the above-described problems, and other problems not mentioned can be clearly understood by a person of an ordinary skill in the art from the description of the disclosure described below.

### [Technical Solution]

An electrode assembly according to the present disclosure is an electrode assembly in which a plurality of electrode plates are wound with a separator therebetween, wherein an outermost electrode plate, which is positioned outermost, among the plurality of electrode plates includes a penetration portion positioned adjacent to an end portion of the outermost electrode plate; and a contact portion of which a part of a periphery is cut so as to protrude from the outermost electrode plate and is folded to tightly contact a periphery of the penetration portion in a state of penetrating the penetration portion.

The penetration portion may be formed with a size corresponding to the contact portion.

The penetration portion may be formed with a size relatively larger than the sealing portion.

The contact portion may be quadrangular.

The contact portion may be triangular.

The contact portion may be semicircular.

The contact portion may be ribbon-shaped.

The ribbon-shaped contact portion may be arranged parallel along a direction of width of the outermost electrode plate.

A length between the contact portion and the penetration portion in the outermost electrode plate may correspond to a length of a circumference of the electrode assembly.

The penetration portion is plural, and each of the plurality of penetration portions may be arranged to be spaced apart at a certain distance along a direction of width of the outermost electrode plate.

The contact portion is plural, and the number of the plurality of contact portion may be equal to the number of penetration portions.

The plurality of electrode plates may include a first electrode plate and a second electrode plate.

An electrode assembly according to another embodiment of the present disclosure is an electrode assembly in which a plurality of electrode plates are wound with a separator therebetween, wherein an outermost electrode plate, which is positioned outermost, among the plurality of electrode plates includes a contact portion of which a part of a periphery is cut so as to protrude from the outermost electrode plate and is folded to contact a periphery of the penetration.

The end portion of the outermost electrode plate may be positioned at a point where the contact portion is folded.

The contact portion may be ribbon-shaped.

The ribbon-shaped contact portion may be arranged parallel along a direction of width of the outermost electrode plate.

A length from the contact portion to the end portion of the outermost electrode plate may correspond to a length of a circumference of the electrode assembly.

The plurality of electrode plates may include a first electrode plate and a second electrode plate.

A rechargeable battery according to an embodiment of the present disclosure includes a case and an electrode assembly accommodated in the case.

### [Advantageous Effects]

In an electrode assembly according to the present disclosure, an end portion of an outermost electrode is finished with a contact portion and a penetration portion. Therefore, since not being finished with a finishing tape like a conventional electrode assembly, cracks caused by the finishing tape can be prevented. Accordingly, the durability of the rechargeable battery can be improved.

In addition, the outer portion of the rechargeable battery is finished with a negative electrode material, without an insulator such as a finishing tape or separator, which can contribute to output.

### [Description of the Drawings]

FIG. 1 is a cross-sectional view illustrating a rechargeable battery according to an embodiment of the present disclosure.
FIG. 2 is a cross-sectional view illustrating the rechargeable battery of FIG. 1.
FIG. 3 is an exploded perspective view illustrating the rechargeable battery of FIG. 1.
FIG. 4 is a perspective view illustrating an electrode assembly extracted from FIG. 3.
FIG. 5 is a perspective view illustrating a state that a part where the contact portion and penetration portion are positioned in the outermost electrode plate is unfolded.
FIG. 6 is a drawing illustrating a contact portion in a semicircular shape.

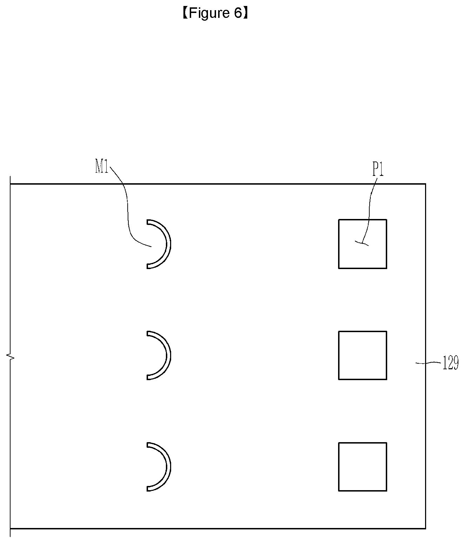

FIG. 6 is a drawing illustrating a contact portion in a triangular shape.

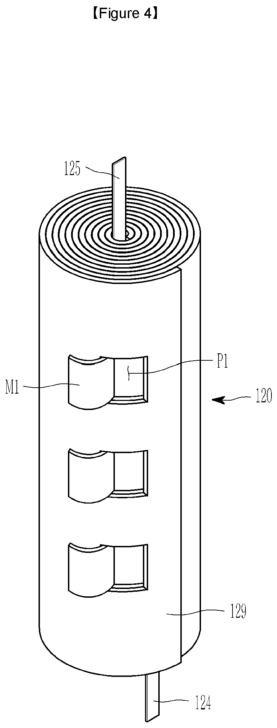

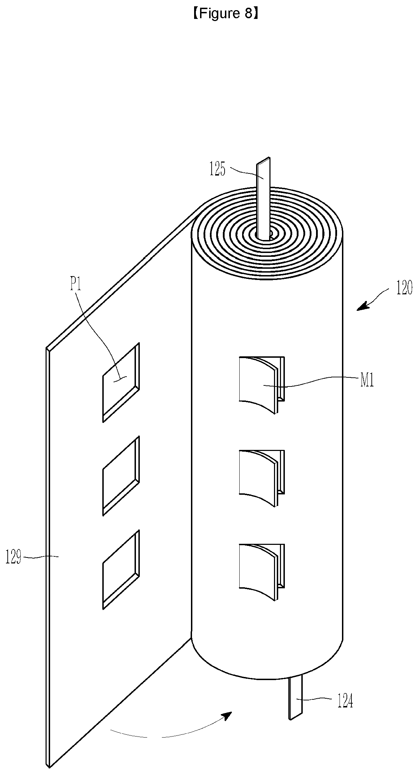

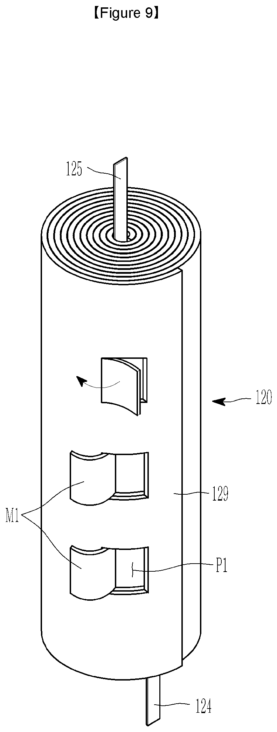

FIG. 8 and FIG. 9 are perspective views sequentially illustrating a process in which the contact portion passes through the penetration portion in the electrode assembly of FIG. 4.
FIG. 8 is a perspective view illustrating a state that a portion where the penetration portion is positioned in the outermost electrode plate is wound toward the contact portion.
FIG. 9 is a perspective view illustrating the contact portion is folded and penetrates the penetration portion, in a state that the end portion of the outermost electrode plate is fully wound.

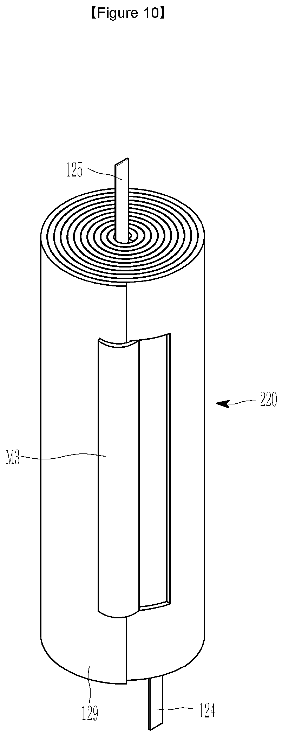

FIG. 10 is a drawing illustrating a contact portion according to a modified example.

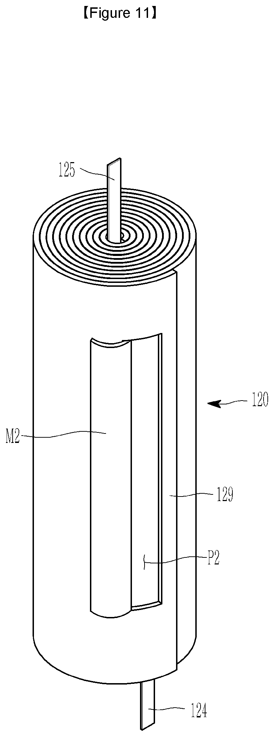

FIG. 11 is a perspective view illustrating an electrode assembly according to another embodiment of the present disclosure.

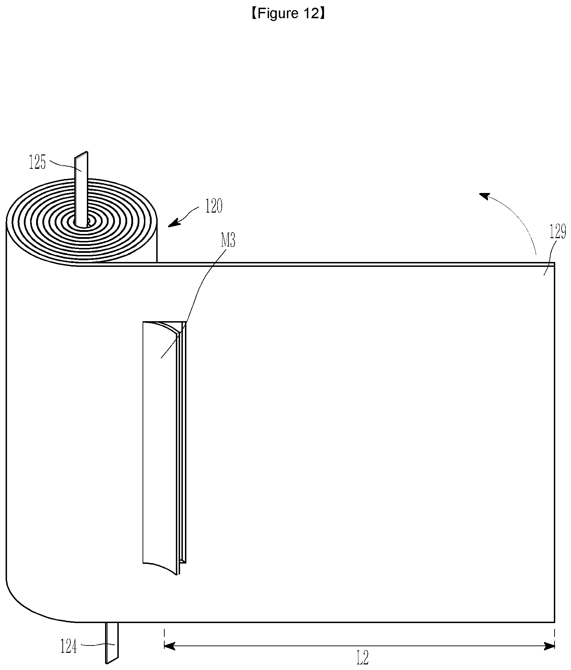

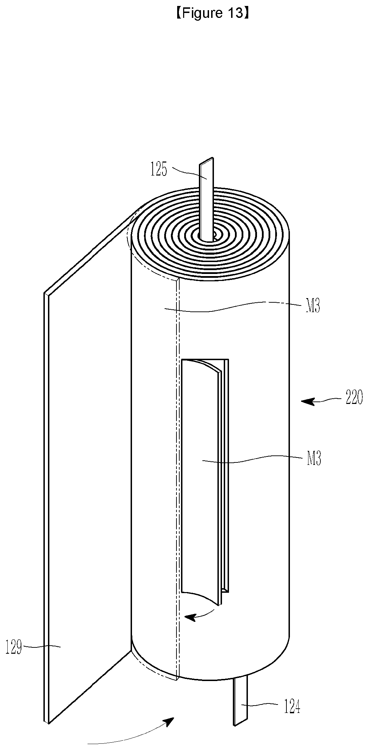

FIG. 12 and FIG. 13 are perspective views sequentially illustrating the process of manufacturing the electrode assembly of FIG. 11.
FIG. 12 is a perspective view illustrating a state that a part where the contact portion is positioned in the outermost electrode plate is unfolded.
FIG. 13 is a perspective view illustrating that the end portion of the outermost electrode plate is positioned adjacent to the contact portion.

### [Mode for Invention]

Embodiments of the present disclosure are provided to more completely explain the present disclosure for a person of an ordinary skill in the art, and the following embodiments may be modified in many different forms, and the scope of the present disclosure is not limited to the following embodiments. Rather, the embodiments are provided to further fulfill and complete the present disclosure, and to fully convey the idea of the present disclosure to a person of ordinary skill in the art.

Also, in the drawings below, the thickness and size of each layer may be exaggerated for convenience of description and clarity, and the same symbol in the drawings indicates the same element. As used in this specification, the term "and/or" includes any one of the listed items and any combination of one or more. In addition, the meaning of "connected" in this specification means not only the case where member A and member B are directly connected, but also the case where member A and member B are indirectly connected such that member C is interposed between member A and member B.

The terminology used in this specification is used to describe particular embodiments and is not intended to limit the present disclosure. As used in this specification, a singular form may include a plural form, unless the context clearly indicates otherwise. Also, in this specification, "comprise," "include," "comprising," or "including" is used for specifying the presence of only the shapes, numbers, steps, operations, members, elements, and/or groups thereof, but not for precluding the presence or addition of one or more other shapes, numbers, operations, members, elements and/or groups.

Although the terms of "first", "second", etc. are used to describe various members, components, regions, layers, and/or parts in this specification, it is obvious that these members, components, regions, layers, and/or parts should not be limited by these terms. These terms are used only for distinguishing one member, component, region, layer or part from another region, component, layer or part. Therefore, the "first" member, component, region, layer or part described below may refer to the "second" member, component, region, layer or part without departing from the teachings of the present disclosure.

Additionally, space-related terms such as "beneath," "below," "lower," "above," and "upper" may be used to facilitate understanding of one element or feature illustrating in drawings relative to another element or feature. These space-related terms are intended to facilitate understanding of the present disclosure in various process states or usage states of the present disclosure, and are not intended to limit the present disclosure. For example, if an element or feature of a drawing is flipped, the element or feature described as "lower" or "below" becomes "upper" or "above."

Therefore, "lower" is a concept that includes "upper" or "below."

Hereinafter, with reference to drawings, a rechargeable battery in which an electrode assembly according to an embodiment of the present disclosure can be installed will be described in detail.

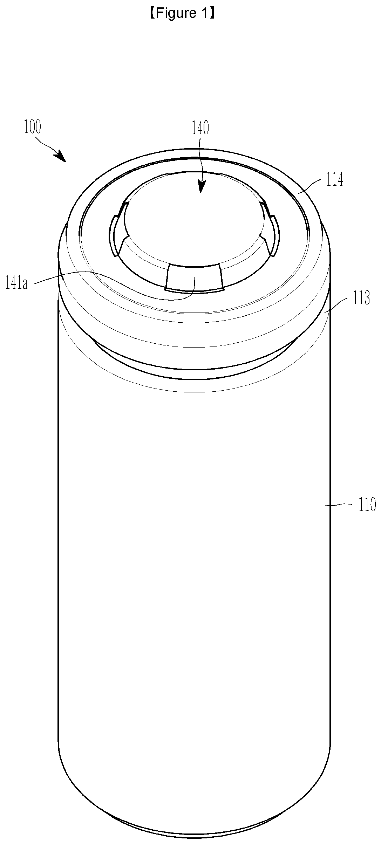

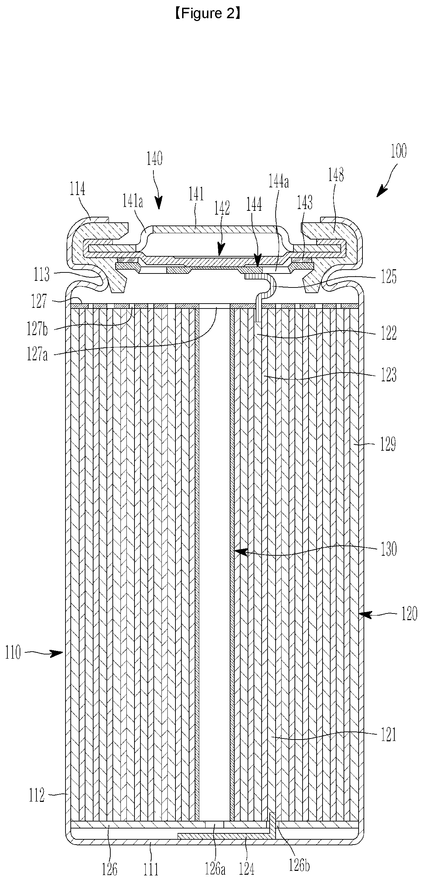

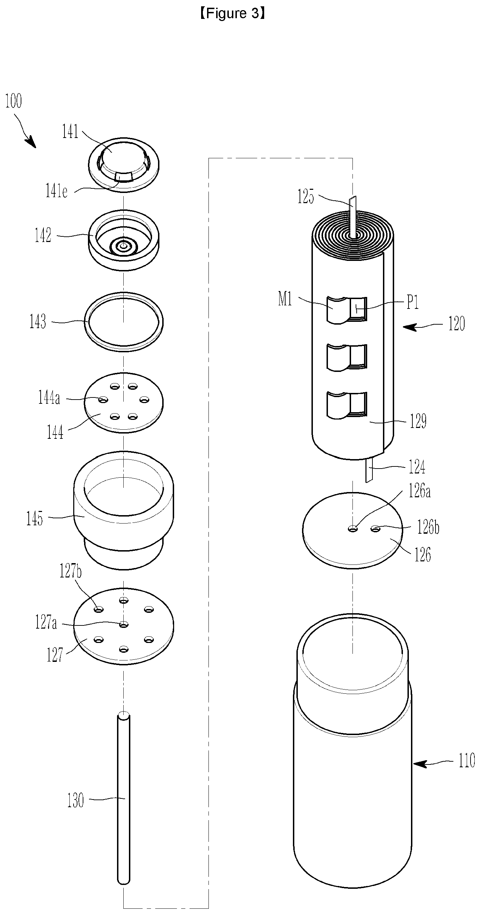

FIG. 1 is a cross-sectional view illustrating a rechargeable battery according to an embodiment of the present disclosure, FIG. 2 is a cross-sectional view illustrating the rechargeable battery of FIG. 1, and FIG. 3 is an exploded perspective view illustrating the rechargeable battery of FIG. 1.

As shown in FIG. 1 to FIG. 3, the rechargeable battery 100 includes a case 110, an electrode assembly 120, and a cap assembly 140.

The case 110 accommodates electrode assembly 120, which will be described later. The case 110 may include a circular bottom portion 111 and a cylindrical side portion 112 extending a predetermined length in a direction from the bottom portion 111 to an upper portion. During the manufacturing process of rechargeable battery 100, the top of case 110 is open. Therefore, during the assembly process of a rechargeable battery, the electrode assembly 120 can be inserted into the case 110 together with electrolyte.

The case 110 may include steel, steel alloy, aluminum, aluminum alloy or equivalents thereof. The case 110 may include a beading portion 113 dented inwardly under the cap assembly 140 and a crimping portion 114 bent inwardly over the cap assembly 140 in order to prevent the electrode assembly 120 and the cap assembly 140 from being detached to the outside.

The electrode assembly 120 may be accommodated inside the case 110. The electrode assembly 120 includes a plurality of electrode plates 121, 122, and a separator 123. The plurality of electrode plates 121,122 includes a first electrode plate 121 and a second electrode plate 122. In the electrode assembly 120, the first electrode plate 121, the second electrode plate 122, and the separator 123 are wound to create an internal space at the innermost side.

The first electrode plate 121 may be, for example, a negative electrode plate. In this case, the second electrode plate 122 may be the positive plate, and vice versa. Hereinafter, for convenience of explanation, it is assumed that the first electrode plate 121 is a negative electrode plate and the second electrode plate 122 is a positive electrode plate.

The negative electrode plate is coated with negative electrode active material (e.g., graphite, carbon, etc.). The positive electrode plate is coated with a positive electrode active material, for example, transition metal oxide (LiCoO2, LiNiO2, LiMn2O4, etc.).

The separator 123 is positioned between the negative electrode plate 121 and the positive electrode plate 122 to prevent short circuit and to allow only the movement of lithium ions.

The negative electrode plate 121, the positive electrode plate 122, and the separator 123 may be wound roughly in a cylindrical shape. The negative electrode plate 121 may include copper (Cu) or nickel (Ni) foil, the positive electrode plate 122 may include aluminum (Al) foil, and the separator 123 may include polyethylene (PE) or polypropylene (PP).

The negative electrode tab 124 extended and protruded downwardly by a certain length may be welded to the negative electrode plate 121, and a positive electrode tab 125 protruded upwardly by a certain length may be welded to the positive electrode plate 122, but the opposite is also possible. The negative electrode tab 124 may include copper or nickel material, and the positive electrode tab 125 may include aluminum material.

The negative electrode tab 124 of the electrode assembly 120 may be welded to the bottom portion 111 of the case 110. Therefore, the case 110 may operate as a negative electrode. Of course, conversely, the positive electrode tab 125 may be welded to the bottom portion 111 of the case 110, and in such case, the case 110 may operate as a positive electrode.

A first insulating plate 126 may be interposed between the electrode assembly 120 and the bottom portion 111. The first insulating plate 126 is combined to the case 110, and includes a first hole 126a at the center and a second hole 126b at the outside thereof. Such first insulating plate 126 may prevent the electrode assembly 120 from electrical contact with the bottom portion 111 of the case 110.

The insulating plate 126 may prevent the positive plate 122 of the electrode assembly 120 from electrical contact with the bottom portion 111. The first hole 126a may allow gas to move quickly upwards when a large amount of gas is generated due to a malfunction in the rechargeable battery. Additionally, the negative electrode tab 124 may penetrate the second hole 126b to be welded to the bottom portion 111.

The second insulating plate 127 may be interposed between the electrode assembly 120 and the cap assembly 140. The second insulating plate 127 is combined to the case 110, and includes a first hole 127a at the center and a plurality of second holes 127b at the outside thereof.

Such second insulating plate 127 may prevent the electrode assembly 120 from electrical contact with the cap assembly 140. The second insulating plate 127 may prevent the negative electrode plate 121 of the electrode assembly 120 from electrical contact with the cap assembly 140.

The first hole 127a may allow gas to quickly move to the cap assembly 140 when a large amount of gas is generated due to malfunction of the rechargeable battery, and the second hole 127b penetrates the positive electrode tab 125 to allow to be welded to the cap assembly 140. Additionally, the remaining second hole 127b may allow the electrolyte to quickly flow into the electrode assembly 120 during the electrolyte injection process.

The cap assembly 140 may include a cap-up (141) having a plurality of penetration holes 141e; a safety vent 142 positioned at a lower portion of the cap-up 141; a connecting ring 143 positioned at a lower portion of the safety vent 142; and a cap-down (144) positioned at a lower portion of the safety vent 142 and the connecting ring 143, including a plurality of penetration holes 144a, and electrically connected to the positive electrode tab 125. The cap-down 144 is positioned at the opposite side of the cap-up 141 with the safety vent 142 therebetween. Additionally, the cap assembly 140 may further include an insulating gasket 145.

The insulating gasket 145 insulates a side portion 112 of case 110 from the cap-up 141, the safety vent 142 and the cap-down 144. The insulating gasket 145 may be substantially pressed between the beading portion 113 and the crimping portion 114 included in the side portion 112 of the case 110.

The penetration hole 141a of the cap-up 141 and the penetration hole 144a of the cap-down 144 may discharge internal gas to the outside when abnormal internal pressure occurs inside the case 110. The internal gas reverses the safety vent 142 upwardly through the penetration hole 141a of the cap-down 144, the safety vent 142 is electrically isolated from the cap-down 144, and then the safety vent 142 may be torn, so that the internal gas may be discharged to the outside.

An electrolyte (not shown in the drawing) may be injected inside the case 110, which allows lithium ions, which are generated by electrochemical reaction at the negative electrode plate 121 and positive electrode plate 122 inside the battery, to move during charging and discharging. The electrolyte may include non-aqueous organic electrolytes that are mixtures of lithium salt and high-purity organic solvents. The electrolyte may include a polymer or solid electrolyte using a polymer electrolyte.

Although an electrode assembly according to an embodiment of the present disclosure is described as being installed in a cylindrical rechargeable battery, but not limited thereto, any rechargeable battery including an electrode assembly formed of a plurality of electrode plates wound with a separator interposed therebetween may be applied.

Hereinafter, an electrode assembly 120 according to an embodiment of the present disclosure will described in detail with reference to drawings.

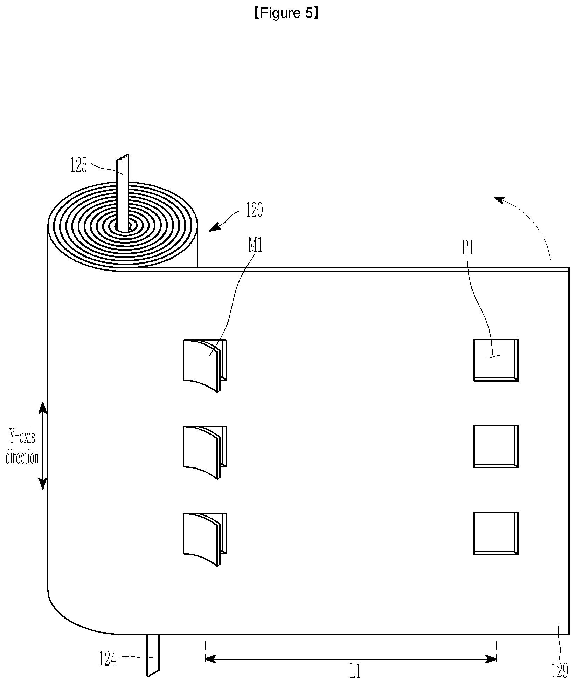

FIG. 4 is a perspective view illustrating an electrode assembly extracted from FIG. 3, and FIG. 5 is a perspective view illustrating a state that a part where the contact portion and penetration portion are positioned in the outermost electrode plate is unfolded.

Referring to FIG. 4 and FIG. 5, in an electrode assembly 120 according to an embodiment of the present disclosure, the outermost electrode plate 129 positioned at the outermost position among the plurality of electrode plates 121, 122 includes a penetration portion P1 and a contact portion M1.

Here, the reference numerals for the plurality of electrode plates are '121' and '122' as described above, but for convenience of explanation, the outermost electrode plate is described with a separate reference numeral '129'.

The penetration portion P1 is positioned adjacent to the end of the outermost electrode plate 129. The penetration portion P1 may be formed with a size corresponding to the contact portion M1 described later. The shape of the penetration portion P1 may be, for example, a quadrangle, but not limited thereto, any shape which the contact portion M1 can pass through may be acceptable.

Although not shown in the drawing, the penetration portion P1 may be formed with a size relatively larger than the contact portion M1. Accordingly, the contact portion M1 can pass through the penetration portion P1 more smoothly.

The contact portion M1 is cut at a part of its periphery so as to protrude from the outermost electrode plate 129, and a part of the contact portion M1 is folded to be tightly contacted at a portion of the periphery of the penetration portion P1 in a state of penetrating the penetration portion P1. In a state that the outermost electrode plate 129 is exploded, the contact portion M1 may be positioned apart from the penetration portion P1. The shape of the contact portion M1 may be, for example, a quadrangle.

Meanwhile, in the electrode assembly 120 according to an embodiment of the present disclosure, the aforementioned penetration portion P1 may be plural. More specifically, each of the plurality of penetration portions P1 may be positioned spaced at a predetermined distance along a direction (y-axis direction) of the width of the outermost electrode plate 129. In this case, the contact portion M1 may be plural, and the number of the plurality of contact portion M1 may be equal to the number of penetration portions.

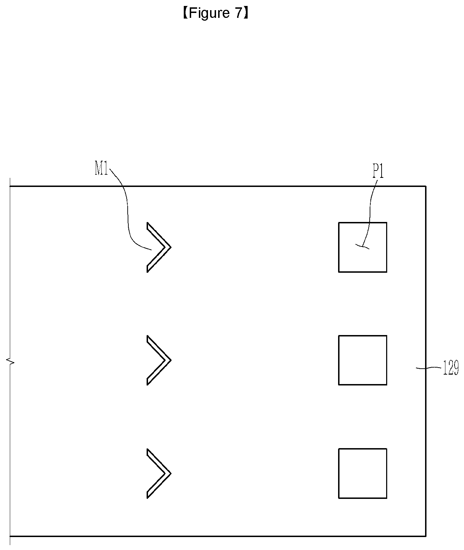

Meanwhile, as shown in FIG. 6, the aforementioned contact portion M1 may be semicircular. Alternatively, as shown in FIG. 7, the contact portion M1 may be triangular.

Hereinafter, a process in which the end portion of the electrode assembly 120 according to an embodiment of the present disclosure is finished by the contact portion M1 and the penetration portion P1 will be described.

FIG. 8 and FIG. 9 are perspective views sequentially illustrating a process in which the contact portion passes through the penetration portion in the electrode assembly of FIG. 4. FIG. 8 is a perspective view illustrating a state that a portion where the penetration portion is positioned in the outermost electrode plate is wound toward the contact portion, and FIG. 9 is a perspective view illustrating the contact portion is folded and penetrates the penetration portion, in a state that the end portion of the outermost electrode plate is fully wound.

First, returning to FIG. 5, the outermost electrode plate 129 of the electrode assembly 120 may be arranged as shown in FIG. 5. Then, referring to FIG. 8, the electrode plate of the electrode assembly 120 continues to be wound. In the outermost electrode plate 129 of the electrode assembly 120, a part where the contact portion M1 is positioned is tightly contacted to the inner side wound first. Next, referring to FIG. 9, as the outermost electrode plate 129 of the electrode assembly 120 continues to be wound, the contact portion M1 and the penetration portion P1 may correspond to each other. Finally, the contact portion M1 is folded and passes through the penetration portion P1 to be tightly contacted to the outside.

Meanwhile, in the outermost electrode plate 129, it may be preferable that the length L1 between the contact portion M1 and the penetration portion P1 corresponds to the length of the circumference of the electrode assembly 120. This may be to allow the contact portion M1 to pass through the penetration portion P1 while the outermost electrode plate 129 of the electrode assembly 120 being wound, as described above.

In the electrode assembly 120 according to an embodiment of the present disclosure as described above, the end of the outermost electrode plate 129 is finished with the contact portion M1 and the penetration portion P1. Therefore, by not finishing with a finishing tape like a conventional electrode assembly 120, cracks caused by the finishing tape can be prevented. Accordingly, the durability of the rechargeable battery can be improved.

Meanwhile, although not shown in the drawing, after the electrode assembly 120 according to an embodiment of the present disclosure is installed inside the case 110 (see FIG. 2), the aforementioned contact portion M1 can be welded to the case 110 (see FIG. 2). That is, the contact portion M1 may also be used as an electrode tab.

FIG. 10 is a drawing illustrating a contact portion according to a modified example.

Referring to FIG. 10, the contact portion M2 may have a ribbon shape. At this time, the number of contact portion M2 may be one, unlike the aforementioned contact portion M2. The ribbon-shaped contact portion M2 may be arranged parallel along a direction of width of the outermost electrode plate 129. The penetration portion P2 may be formed in a shape of slit corresponding to the contact portion M2.

Unlike the aforementioned contact portion M2, the contact portion M2 according to this modified example may be processed by punching or cutting only a single portion without necessity to punch or cut multiple spaces to process the contact portion M2 and the penetration portion P2. In addition, the manufacturing process can be relatively simplified since the sealing portion M2 can be manufactured by folding it only once when manufacturing the electrode assembly 120.

FIG. 11 is a perspective view illustrating an electrode assembly according to another embodiment of the present disclosure.

Referring to FIG. 11, the outermost electrode plate 129 included in the electrode assembly 120 according to another embodiment of the present disclosure may include the contact portion M3.

A part of periphery of the contact portion M3 is cut to be protruded from the outermost electrode plate 129, and the part folded to tight contact the end portion of the outermost electrode plate 129. That is, the outermost electrode plate 129 included in the electrode assembly 120 according to another embodiment of the present disclosure, unlike the aforementioned electrode assembly 120, does not include the penetration portion P1 and only includes the contact portion M3.

In an electrode assembly 120 according to another embodiment of the present disclosure, the end portion of the outermost electrode plate 129 may be positioned at a portion where the contact portion M3 is folded.

The contact portion M3 may be ribbon-shaped. The ribbon-shaped contact portion M3 may be arranged parallel along a direction of width of the outermost electrode plate 129.

And, the length L2 from the contact portion M3 to the end portion of the outermost electrode plate 129 may correspond to the length of the circumference of the electrode assembly 120. Accordingly, as described above, the contact portion M3 can be folded and tightly in contact with the end portion of the outermost electrode plate 129.

Hereinafter, a process in which the end portion of the electrode assembly 120 according to an embodiment of the present disclosure is finished by the contact portion M3 will be described.

FIG. 12 and FIG. 13 are perspective views sequentially illustrating the process of manufacturing the electrode assembly of FIG. 11. Accordingly, as described above, the contact portion M3 can be folded and tightly in contact with the end portion of the outermost electrode plate 129, and FIG. 13 is a perspective view illustrating that the end portion of the outermost electrode plate is positioned adjacent to the contact portion.

First, referring to FIG. 12, the outermost electrode plate 129 of the electrode assembly 120 may be arranged as shown in FIG. 12. Then, referring to FIG. 13, the electrode plate of the electrode assembly 120 is wound continuously. In the outermost electrode plate 129 of the electrode assembly 120, a part where the contact portion M3 is positioned is tightly contacted to a part wound first.

Next, returning to FIG. 11, as the electrode plate of the electrode assembly 120 continues to be wound, the end portion of the outermost electrode plate 129 is positioned adjacent to the contact portion M3. Finally, the contact portion M3 is folded and in contact with the end portion of the outermost electrode plate 129.

In the electrode assembly 120 according to another embodiment of the present disclosure, unlike the electrode assembly 120 described above, the end portion of the outermost electrode plate 129 does not have a portion protrudes toward the right side with respect to the contact portion M3 with reference to the direction shown in the drawing . Therefore, the end portion of the outermost electrode plate 129 can be neatly finished.

Although various embodiments of the present disclosure have been described above, the drawings and detailed descriptions of the disclosure described so far are merely exemplary of the present disclosure, and are only used for the purpose of explaining the present disclosure, and are not used to limit the meaning or the scope of the present disclosure described in the patent claims. Therefore, a person of an ordinary skill in the art can understand that various modifications and other equivalent embodiments can be driven from those. Therefore, the genuine technical protection scope of the present disclosure shall be determined by the technical idea of the attached patent claims.

### [Description of Symbols]

| | | | |
|---|---|---|---|
| 100: | rechargeable battery | | |
| 110: | case | 120, 220: | electrode assembly |
| 121 : | first electrode plate 1 | 122: | second electrode plate |
| 123: | separator | 129: | outermost electrode plate |
| M1, M2, M3: | contact portion | P1, P2: | penetrating portion |

## Claims

1. An electrode assembly comprising: a plurality of electrode plates wound with a separator therebetween, wherein
an outermost electrode plate positioned outermost among the plurality of electrode plates comprises:
a penetration portion positioned adjacent to an end portion of the outermost electrode plate; and
a contact portion of which a part of a periphery is cut so as to protrude from the outermost electrode plate, and folded to be in tight contact with a periphery of the penetration portion in a state of penetrating the penetration portion.

2. The electrode assembly of claim 1, wherein
the penetration portion is formed with a size corresponds to the contact portion.

3. The electrode assembly of claim 1, wherein
the penetration portion is formed with a size relatively larger than the contact portion.

4. The electrode assembly of claim 1, wherein
the contact portion is quadrangular.

5. The electrode assembly of claim 1, wherein
the contact portion is triangular.

6. The electrode assembly of claim 1, wherein
the contact portion is semicircular.

7. The electrode assembly of claim 1, wherein
the contact portion is ribbon-shaped.

8. The electrode assembly of claim 8, wherein
the ribbon-shaped contact portion is arranged parallel along a direction of width of the outermost electrode plate.

9. The electrode assembly of claim 1, wherein
a length between the contact portion and the penetration portion in the outermost electrode plate corresponds to a length of a circumference of the electrode assembly.

10. The electrode assembly of claim 1, wherein
the penetration portion is plural, and each of the plurality of penetration portions is arranged to be spaced apart at a predetermined distance along a direction of width of the outermost electrode plate.

11. The electrode assembly of claim 10, wherein
the contact portion is plural, and the number of the plurality of contact portion is equal to the number of penetration portions.

12. The electrode assembly of claim 1, wherein
the plurality of electrode plates include a first electrode plate and a second electrode plate.

13. An electrode assembly comprising: a plurality of electrode plates wound with a separator therebetween, wherein
an outermost electrode plate which is the outermost among the plurality of electrode plates comprises:
a contact portion of a part of a periphery is cut so as to protrude from the outermost electrode plate, and folded to be in tight contact with an end portion of the outermost electrode plate.

14. The electrode assembly of claim 13, wherein
the end portion of the outermost electrode plate is positioned at a part where the contact portion is folded.

15. The electrode assembly of claim 13, wherein
the contact portion is ribbon-shaped.

16. The electrode assembly of claim 15, wherein
the ribbon-shaped contact portion is arranged parallel along a direction of width of the outermost electrode plate.

17. The electrode assembly of claim 13, wherein
a length from the contact portion to the end portion of the outermost electrode plate corresponds to a length of a circumference of the electrode assembly.

18. The electrode assembly of claim 13, wherein
the plurality of electrode plates include a first electrode plate and a second electrode plate.

19. A rechargeable battery comprising:
a case; and
an electrode assembly accommodated in the case;
wherein the electrode assembly is one of claim 1 to claim 18.
